Europäisches Patentamt

European Patent Office

Office européen des brevets

(19)

(11) Veröffentlichungsnummer: **0 067 286**
**B2**

(12) # NEUE EUROPÄISCHE PATENTSCHRIFT

(45) Veröffentlichungstag der neuen Patentschrift:
**13.01.88**

(21) Anmeldenummer: **82103283.6**

(22) Anmeldetag: **19.04.82**

(51) Int. Cl.⁴: **A 01 B 3/421**

(54) **Steuervorrichtung für das Verschwenken eines Drehpfluges.**

(30) Priorität: **15.06.81 DE 3123727**

(43) Veröffentlichungstag der Anmeldung:
**22.12.82 Patentblatt 82/51**

(45) Bekanntmachung des Hinweises auf die Patenterteilung:
**12.09.84 Patentblatt 84/37**

(45) Bekanntmachung des Hinweises auf die Entscheidung
über den Einspruch:
**13.01.88 Patentblatt 88/2**

(84) Benannte Vertragsstaaten:
**AT DE FR GB IT NL SE**

(56) Entgegenhaltungen:
**DE-A-2 716 262**
**DE-A-2 757 467**
**DE-A-2 945 703**
**DE-B-2 601 636**
**FR-A-2 261 434**

(73) Patentinhaber: **EMIL WEBER FABRIK FÜR
ÖLHYDRAULIK GMBH & CO., Heilbronner
Strasse 30, D-7129 Güglingen/Württ. (DE)**

(72) Erfinder: **Obermeyer, Günter, Lortzingstrasse 2,
D-7129 Güglingen (DE)**
Erfinder: **Burk, Herbert, Schillerstrasse 9, D-7129
Güglingen (DE)**

(74) Vertreter: **Säger, Manfred, Dipl.- Ing.,
Patentanwälte Dipl.- Ing. Otto Flügel Dipl.- Ing.
Manfred Säger Cosimastrasse 81, D-8000
München 81 (DE)**

EP 0 067 286 B2

## Beschreibung

Die Erfindung betrifft eine Steuervorrichtung mit den im ersten Teil des Anspruchs 1 angegebenen Merkmalen.

Bei dieser aus der DE-B-26 01 636 bekannten Vorrichtung ist in beiden Drehphasen ein kraftbetätigtes Arbeiten des doppelt wirkenden Hydraulikzylinders möglich, wobei eine selbsttätige Umsteuerung im Totpunkt ohne Hilfsmittel von außen erfolgt.

Der Erfindung liegt die Aufgabe zugrunde, diese Vorrichtung u. a. durch den Einsatz von weniger Schaltelementen zu vereinfachen und funktionssicherer zu machen.

Diese Aufgabe wird durch die im Kennzeichen des Anspruchs 1 angegebenen Merkmale gelöst.

Das erfindungsgemässe Schaltungssystem ist an alle Betriebsdrücke verschiedener Landmaschinen und Traktoren anschliessbar, weil keine Blenden in den zu den Zylinderräumen führenden Leitungen vorgesehen sind, die den Volumenstrom und/oder den Betriebsdruck beschränken. Ausserdem ist die Schaltung gegen Druckspitzen unempfindlich und führt zu keinen Fehlschaltungen, und zwar aufgrund des Übersetzungsverhältnisses an dem Folgeventil von zweiter zu dritter Drucksteuerleitung von grösser als 1, vorzugsweise 10. Da die zweite Drucksteuerleitung an den den oberen Totpunkt bildenden zweiten Zylinderraum angeschlossen ist, entsteht infolge des Strömungswiderstandes der ersten Blende zum Tank ein Staudruck, der über die zweite Drucksteuerleitung auf das Folgeventil mit dem Übersetzungsverhältnis bezogen auf die dritte Drucksteuerleitung wirkt. Somit wird das Folgeventil von dem hierdurch erzeugten Druck und aufgrund der Kraft der Feder in seiner Geschlossenstellung gehalten. Erst kurz vor Erreichen des Totpunktes, wenn praktisch kein Druck mehr im zweiten Zylinderraum wirkt, ist auch die zweite Drucksteuerleitung drucklos, so dass nunmehr nur noch die Kraft der zweiten Feder auf das Folgeventil einwirkt. Diese Kraft bestimmt das Druckniveau, bei dem das Folgeventil bei Erreichen des Totpunktes druckabhängig schaltet und das Vierwege-Zweipositionsventil in seine erste Position umschaltet, in der es aufgrund einer - an sich bekannten - Selbsthalteschaltung gehalten wird und wodurch die zum Tank bzw. zu der den Betriebsdruck erzeugenden Pumpe führenden Leitungen umgeschaltet werden. Schliesslich wird der Vorteil erzielt, dass durch das Vierwege-Zweipositionsventil keine Differentialschaltung erforderlich ist, die einen grossbauenden Zylinder zur Folge hat, zwar schnelle Drehzeiten zulässt, hingegen aber druckspitzenempfindlich ist.

Zweckmässige Ausgestaltungen und Weiterbildungen der Erfindung sind in den Unteransprüchen gekennzeichnet.

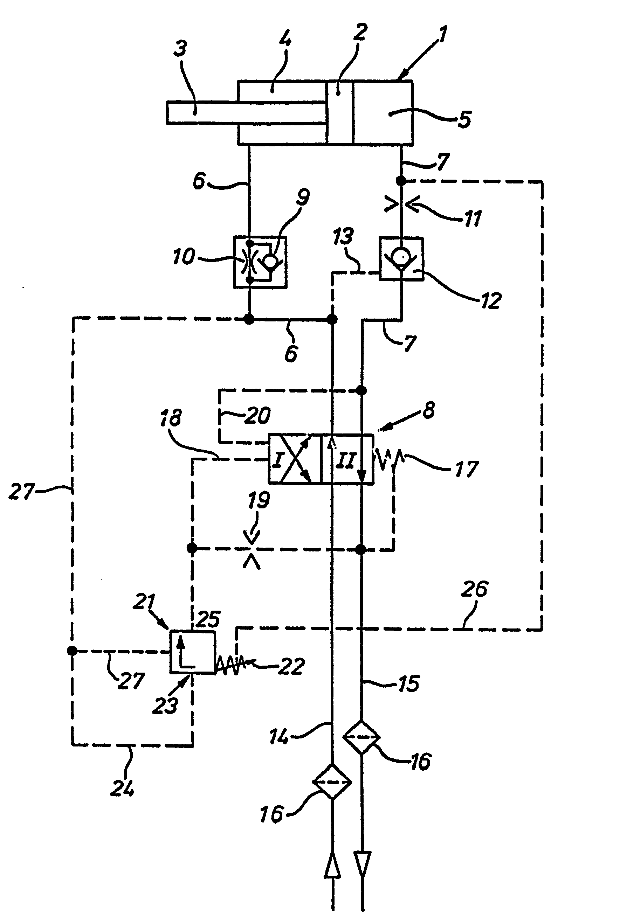

Weitere Merkmale, Einzelheiten und Vorteile der Erfindung ergeben sich aus der nachfolgenden Beschreibung einer in der Zeichnung schematisch als Schaltbild dargestellten, bevorzugten Ausführungsform.

In der Zeichnung ist der Hydraulikzylinder insgesamt mit 1 bezeichnet und weist einen Kolben 2 mit einer Kolbenstange 3 auf, die an einem wendbaren Pflugschartträger angelenkt sind, der aus Gründen der Übersichtlichkeit aus der Zeichnung weggelassen ist.

An dem kolbenstangenseitig vorhandenen ersten Zylinderraum 4 und dem kolbenseitigen zweiten Zylinderraum 5, dessen Volumen bei Erreichen des Totpunktes minimal ist, sind Leitungen 6 bzw. 7 zu einem insgesamt mit 8 bezeichneten Vierwege-Zweipositionsventil geführt. In der Leitung 6 ist ein in Richtung auf den ersten Zylinderraum 4 öffnendes Rückschlagventil 9 mit einer parallel dazu geschalteten Blende 10 angeordnet. In die zu dem Vierwege-Zweipositionsventil 8 führende Leitung 7 ist über eine Blende 11 ein druckabhängig entsperrbares, zum Zylinderraum 5 hin öffnendes Rückschlagventil 12 angeordnet, dessen Drucksteuerleitung 13 an die Leitung 6 angeschlossen ist.

Die beiden Leitungen 6, 7 führen von dem Vierwege-Zweipositionsventil 8 über die Leitungen 14 bzw. 15 über schematisch angedeutete Siebe 16 zu dem Tank (Leitung 15) oder zu der den Betriebsdruck erzeugenden Pumpe (Leitung 14).

Das Vierwege-Zweipositionsventil 8 ist in der gezeigten zweiten Position 11 aufgrund der Kraft einer ersten Feder 17 gehalten. Die dieser Feder entgegenwirkende erste Drucksteuerleitung 18 ist über eine Blende 19 an die zu dem Tank führende Leitung 15 angeschlossen. Das Vierwege-Zweipositionsventil 8 ist in bekannter Weise mit einer Selbsthaltedrucksteuerleitung 20 versehen, die an die Leitung 7, also zwischen dem Ventil 8 selbst und dem zweiten Zylinderraum 5, angeschlossen ist.

Weiterhin ist ein Folgeventil 21 vorgesehen, dessen Geschlossenstellung in der Zeichnung gezeigt ist, in welcher es mittels der Kraft einer zweiten Feder 22 gehalten ist. Der Eingang 23 des Folgeventils 21 ist an die zu dem ersten Zylinderraum 4 führende Leitung 6 über die Leitung 24 und der Ausgang 25 an die erste Drucksteuerleitung 18 angeschlossen.

Das Folgeventil 21 weist ferner zwei einander entgegenwirkende Steuerleitungen, nämlich eine zweite Drucksteuerleitung 26 auf, die an die zu dem zweiten Zylinderraum 5 führende Leitung 7 angeschlossen ist, und wirkt in Richtung der Kraft der zweiten Feder 22. Die dritte Drucksteuerleitung 27, welche an die Leitung 24 angeschlossen ist, wirkt entgegen der Drucksteuerleitung 26 auf einen (in der Zeichnung nicht dargestellten) Kolben mit unterschiedlichen Querschnittsflächen, so dass der Druck in der zweiten Drucksteuerleitung 26 eine um das Übersetzungsverhältnis grössere Kraft als der Druck in der dritten Drucksteuerleitung zur Folge hat.

In der gezeigten zweiten Position 11 wird über die Leitung 14 und das Vierwege-Zweipositionsventil sowie über die Leitung 6 dem ersten Zylinderraum 4 der Betriebsdruck zugeführt, so dass sich der Kolben 2 nebst Kolbenstange 3 in Richtung auf den Totpunkt hinzubewegt. Infolge des Drucks in der Leitung 6 wird über die Steuerleitung 13 das Rückschlagventil 12 geöffnet, so dass über diese Leitung 7 und das Vierwege-Zweipositionsventil 8 die Hydraulikflüssigkeit über die Leitung 15 zu dem (nicht gezeigten) Tank zurückfliessen kann. Zugleich wird durch den Widerstand in der Leitung 7 bzw. 15 oder die Blende 11 ein Staudruck beim Abfliessen der Hydraulikflüssigkeit erzeugt. Ausserdem liegt über die dritte Drucksteuerleitung 27 der volle Betriebsdruck von der Leitung 6 an dem Folgeventil 21 an. Die resultierenden Kräfte von dem Staudruck in der zweiten Drucksteuerleitung zu dem Betriebsdruck in der dritten Drucksteuerleitung sind durch das Übersetzungsverhältnis bestimmt, so dass in diesem Falle der resultierende Druck sich der Kraft der zweiten Feder 22 überlagert und das Folgeventil 21 in seiner Geschlossenstellung hält. Erst bei Erreichen des Totpunkts, wenn praktisch keine Hydraulikflüssigkeit aus dem zweiten Zylinderraum 5 in die Leitung 7 zu dem Tank mehr führt, wird der Staudruck zu Null, so dass nunmehr der Betriebsdruck auf der dritten Drucksteuerleitung 27 entgegen der Kraft der zweiten Feder 22 das Folgeventil betätigen kann, und dadurch wiederum das Vierwege-Zweipositionsventil in seine (nicht gezeigte) erste Position I entgegen der Kraft der ersten Feder 17 bewegt wird und die Umschaltung eingeleitet wird.

**Patentansprüche**

1. Steuervorrichtung für das Verschwenken eines Drehpfluges um seine Drehachse mittels eines über Leitungen (14, 15) an die den Betriebsdruck erzeugende Pumpe bzw. den Tank angeschlossenen, doppelt wirkenden Hydraulikzylinders (1), der um eine gerätefeste Achse schwenkbar gelagert ist und dessen mit dem Kolben (2) verbundene Kölbenstange (3) am Pflugschartträger angelenkt ist, mit einem die Richtungsänderung der Kolbenstange (3) am Totpunkt bewirkenden Wege-Zweipositionsventil (8), welches in seiner ersten Position druckabhängig selbsthaltend gesteuert ist, wobei ein Folgeventil (21) mit einem Eingang (23) und einem Ausgang (25), die durch die Strömungsrichtung definiert sind, vorgesehen ist, das in seiner Geschlossenstellung mit der Kraft einer zweiten Feder (22) gehalten ist sowie eine dazu entgegengesetzt wirkende dritte Drucksteuerleitung (27) aufweist, die so an die zu dem ersten Zylinderraum (4), der im Totpunkt maximal ist, führende Leitung (6) angeschlossen ist, daß sie vor Erreichen des Totpunkts denselben Betriebsdruck wie der erste Zylinderraum (4) führt, und wobei der Eingang (23) des Folgeventils (21) zumindest während dessen Offenstellung an eine den Betriebsdruck führende Leitung (6) sowie die dritte Drucksteuerleitung (27) anschließbar ist, und wobei in der zu dem bei Erreichen des Totpunktes minimales volumen aufweisenden zweiten Zylinderraum (5) führenden Leitung (7) ein entsperrbares, zum zweiten Zylinderraum (5) öffnendes Rückschlagventil (12) und zwischen dem zweiten Zylinderraum (5) und dem Tank eine erste Blende (11) angeordnet ist, <u>dadurch gekennzeichnet</u>, daß das Wege-Zweipositionsventil als Vierwege-Zweipositionsventil (8) ausgebildet ist, das in seiner zweiten Position (II) mit der Kraft einer ersten Feder (17) gehalten und mit einer der Kraft der ersten Feder (17) entgegenwirkenden ersten Drucksteuerleitung (18) versehen ist, daß das Folgeventil (21) mit seinem Ausgang (25) an die erste Drucksteuerleitung (18) anschließbar ist, daß das Vierwege-Zweipositionsventil (8) unmittelbar über eine Selbsthalte-Drucksteuerleitung (20) zwischen dem Vierwege-Zweipositionsventil (8) und dem Rückschlagventil (12) an die zu dem zweiten Zylinderraum (5) führende Leitung (7) angeschlossen und dadurch druckabhängig selbsthaltend gesteuert ist, daß eine in Richtung der zweiten Feder (22) wirkende zweite Drucksteuerleitung (26) an die Leitung (7) zu dem zweiten Zylinderraum (5) zwischen diesem und der ersten Blende (11) angeschlossen ist, die in Strömungsrichtung von dem zweiten Zylinderraum (5) weg vor dem Rückschlagventil (12) angeordnet ist, und daß die zweite Drucksteuerleitung (26) zu der dritten Drucksteuerleitung (27) an dem Folgeventil (21) ein Übersetzungsverhältnis der wirksamen Flächen von zweiter zu dritter Drucksteuerleitung (26 zu 27) von größer als eins aufweist.

2. Vorrichtung nach Anspruch 1, <u>dadurch gekennzeichnet</u>, daß der Eingang (23) des Folgeventils (21) an die zu dem ersten Zylinderraum (4) führende Leitung (6) mittels einer Leitung (24) angeschlossen ist.

3. Vorrichtung nach einem der Ansprüche 1 oder 2, <u>dadurch gekennzeichnet</u>, daß das Druckübersetzungsverhältnis wesentlich größer als 1, vorzugsweise 10, ist.

4. Vorrichtung nach einem der Ansprüche 1 bis 3, <u>dadurch gekennzeichnet</u>, daß die Kraft der zweiten Feder (22) einstellbar ist.

5. Vorrichtung nach einem der Ansprüche 1 bis 3, <u>dadurch gekennzeichnet</u>, daß die Kraft der zweiten Feder (22) geringer oder gleich ist wie die durch den gewünschten Umschaltdruck auf der dritten Drucksteuerleitung (27) erzeugte Stellkraft.

6. Vorrichtung nach einem der Ansprüche 1 bis 5, <u>dadurch gekennzeichnet</u>, daß die erste Drucksteuerleitung (18) an die zum Tank führende Leitung (15) angeschlossen ist.

7. Vorrichtung nach Anspruch 6, <u>dadurch gekennzeichnet</u>, daß die erste Drucksteuerleitung (18) über eine zweite Blende (19) an die zum Tank führende Leitung (15) angeschlossen ist.

8. Vorrichtung nach einem der Ansprüche 1 bis 7, dadurch gekennzeichnet, daß die dritte Drucksteuerleitung (27) an die zu dem ersten Zylinderraum (4) führende Leitung (6) zwischen dem Vierwege- Zweipositionsventil (8) und einer dritten Blende (10) angeschlossen ist.

9. Vorrichtung nach einem der Ansprüche 1 bis 8, dadurch gekennzeichnet, daß die Steuervorrichtung als Nachrüsteinheit ausgebildet ist.

## Claims

1. Control device for turning a reversible plough about its axis of rotation by means of a double-acting hydraulic cylinder (1) which is connected to the pump or tank generating the operating pressure via lines (14, 15), which is rotatably mounted about an axis which is rigid with the equipment and the piston rod of which, which is connected to the piston (2), is connected at the ploughshare carrier in an articulated manner, with a directional two-position valve (8), which effects the change in direction of the piston rod (3) at the dead centre and which is controlled in its initial position in a self-retaining manner according to pressure response, whereby a sequence valve (21) is provided with an inlet (23) and an outlet (25), which are defined by the direction of flow, which is held in its closed position by the force of a second spring (22) and which is also provided with a third pressure control line (27) with an opposed action to this, which is connected in such a way to the line (6) leading to the first cyliner space (4), which is at its maximum at the dead centre, that it carries the same operating pressure as the first cylinder space (4) before reaching the dead centre and whereby the inlet (23) of the sequence valve (21) can be connected at least whilst it is in the open position to a line (6) carrying the operating pressure and to the third pressure control line (27) and whereby a releasable non-return valve (12) opening to the second cylinder space (5) is arranged in the line (7) leading to the second cylinder space (5) which has a minimum volume when the dead centre is reached and a first diaphragm (11) is arranged between the second cylinder space (5) and the tank, characterised in that the directional two-position valve is constructed as a fourway two-position valve (8), which is held in its second position (II) by the force of a first spring (17) and which is provided with a first pressure control line (18) which acts in an opposed manner to the force of the first spring (17), in that the sequence valve (21) with its outlet (25) can be connected to the first pressure control line (18), in that the four-way two-position valve (8) is connected directly via a self-retaining pressure control line (20) between the four-way two-position valve (8) and the non- return valve (12) to the line (7) leading to the second cylinder space (5) and in this way is controlled in a self-retaining manner according to pressure response, in that a second pressure control line (26) acting in the direction of the second spring (22) is connected to the line (7) to the second cylinder space (5) between this and the first diaphragm (11), which is arranged in front of the nonreturn valve (12) in the direction of flow away from the second cylinder space (5) and in that the second pressure control line (26) to the third pressure control line (27) at the sequence valve (21) has a transmission ratio of the effective surfaces from the second to the third pressure control line (26 to 27) of more than one.

2. Device according to claim 1, characterised in that the inlet (23) of the sequence valve (21) is connected to the line (6) leading to the first cylinder space (4) by means of a line (24).

3. Device according to one of claims 1 or 2, characterised in that the pressure transmission ratio is considerably greater than 1 and for preference is 10.

4. Device according to one of claims 1 to 3, characterised in that the force of the second spring (22) can be adjusted.

5. Device according to one of claims 1 to 3, characterised in that the force of the second spring (22) is smaller than or equal to the controlling force generated by the desired change-over pressure on the third pressure control line (27).

6. Device according to one of claims 1 to 5, characterised in that the first pressure control line (18) is connected to the line (15) leading to the tank.

7. Device according to claim 6, characterised in that the first pressure control line (18) is connected via a second diapragm (19) to the line (15) leading to the tank.

8. Device according to one of claims 1 to 7, characterised in that the third pressure control line (27) is connected to the line (6) leading to the first cylinder space (4) between the four-way two-position valve (8) and a third diaphragm (10).

9. Device according to one of claims 1 to 8, characterised in that the control device is constructed as a retrofit unit.

## Revendications

1. Dispositif de commande de retournement pour charrue réversible autour de son axe au moyen d'un vérin hydraulique (1) à double action, relié par des canalisations (14, 15) à la pompe qui fournit la pression de fonctionnement ou au réservoir, qui est monté de manière à pouvoir pivoter autour d'un axe fixé sur l'appareil et dont la tige de piston (3), reliée au piston (2), s'articule sur le support de soc, et qui comporte une vanne (8) à deux positions et à plusieurs voies qui assure, au point mort, le channement de sens de la tige de piston (3), qui, dans sa première position est maintenue automatiquement en fonction de la pression, avec une soupape de combinaison (21) ayant une entrée (23) et une sortie (25), qui sont définies par la direction de l'écoulement, et qui, dans sa position de fermeture, est maintenue par la force d'un deuxième ressort (22), cette soupape de combinaison comportant une troisième canalisation (27) de commande par pression agissant en sens opposé au ressort, cette troisième canalisation (27) étant reliée à la canalisation (6) raccordée à la première chambre (4) du vérin qui est maximale au point mort, de telle façon qu'elle transmette, avant que le point mort ne soit atteint, la même pression de fonctionnement que la première chambre (4) du vérin, l'entrée (23) de la soupape de combinaison (21) pouvant, dans sa position d'ouverture, être reliée à une canalisation (6) qui transmet la pression de fonctionnement, ainsi qu'à la troisième canelisation (27) de commande par pression, une soupape d'arrêt (12) s'ouvrant en direction de la seconde chambre (5) du vérin étant montée dans la canalisation (7) raccordée à la seconde chambre (5) du vérin qui présente le volume minimal lorsque le point mort est atteint, un premier diaphragme (11) étant disposé entre la seconde chambre (5) du vérin et le réservoir, caractérisé en ce que la vanne (8) à deux positions et à plusieurs voies est constituée par une vanne à deux positions et à quatre voies qui est maintenue dans sa seconde position (II) sous l'action d'un premier ressort (17) et qui est pourvue d'une première canalisation de pression de commande (18) agissant a l'encontre du premier ressort (17), la soupape de combinaison (21) est raccordée, par sa sortie (25), à la première canalisation de commande par pression (18), la vanne (8) à deux positions et à quatre voies est raccordée directement, par l'intermédiaire d'une canalisation de commande par pression (20) d'auto-maintien qui est reliée, entre la vanne (8) à deux positions et à quatre voies et la soupape d'arrêt (12), à la canalisation (7) reliée à la seconde chambre (5) du vérin et elle est de ce fait commandée en étant maintenue en position sous l'effet de la pression, une deuxième canalisation (26) de commande par pression, agissant dans le sens du second ressort (22), est raccordée à la canalisation (7) reliée à la seconde chambre (5) du vérin, entre cette chambre et le premier diaphragme (11) qui est disposé, dans le sens de l'écoulement, après la seconde chambre (5) du vérin et avant la soupape d'arrêt (12), et la deuxième canalisation (26) de commande par pression présente, par rapport à la troisième canalisation (27) de commande par pression, à l'endroit de la soupape de combinaison (21), un rapport de multiplication des surfaces actives, de la deuxième à la troisième canalisation de commande par pression (26 à 27), qui est supérieur à un.

2. Dispositif suivant la revendication 1 caractérisé en ce que l'entrée (23) de la soupape de combinaison (21) est reliée, par la canalisation (24), à la canalisation (6) conduisant à la première chambre (4) du vérin.

3. Dispositif suivant l'une quelconque des revendications 1 ou 2 caractérisé en ce que le rapport de multiplication de la pression est nettement supérieur à 1 et de préférence égal à 10.

4. Dispositif suivant l'une quelconque des revendications 1 à 3 caractérisé en ce que la force du deuxième ressort (22) est réglable.

5. Dispositif suivant l'une quelconque des revendications 1 à 3 caractérisé en ce que la force du deuxième ressort (22) est inférieure ou égale à la force de mise en place produite par la pression de commutation voulue qui règne dans la troisième canalisation (27) de commande par pression.

6. Dispositif suivant l'une quelconque des revendications 1 à 5 caractérisé en ce que la première canalisation (18) de commande par pression est reliée à la canalisation (15) qui conduit au réservoir.

7. Dispositif suivant la revendicotion 6 caractérisé en ce que la première canalisation (18) de commande par pression est reliée, par un troisième diaphragme (19), à la canalisation (15) qui conduit au réservoir.

8. Dispositif suivant l'une quelconque des revendications 1 à 7 caractérisé en ce que la troisième canalisation (27) de commande par pression est reliée à la canalisation (6), qui conduit à la première chambre (4) du vérin, entre la vanne (8) à deux positions et à quatre voies et un troisième diaphragme (10).

9. Dispositif suivant l'une quelconque des revendications 1 à 8 caractérisé en ce que le dispositif de commande est une unité montée après coup.